# EUROPEAN PATENT APPLICATION

(11) **EP 4 717 528 A1**
(43) Date of publication of application: **01.04.2026**
(21) Application number: 25203957.3
(22) Date of filing: 23.09.2025
(51) Int. Cl.: B60R 19/34

(54) **ENERGY ABSORBING ELEMENT FOR VEHICLE STRUCTURE**

(30) Priority: 25.09.2024 US 202463698584 P
(71) Applicant: Magna International Inc., Aurora, ON L4G 7K1 (CA)
(72) Inventor: Leberl, Patrick, 7000 Eisenstadt (AT)
(74) Representative: Grünecker Patent- und Rechtsanwälte PartG mbB

(57) **Abstract**

A vehicle bumper assembly includes a bumper beam extending from a first beam end to a second beam end to present an outer bumper surface and an inner bumper surface disposed in generally spaced relationship to one another. At least one crash box is disposed adjacent one of the first or second beam ends and extends from a first crash box end secured to the inner bumper surface to a second crash box end to define a crash box cavity. A flange plate is secured to the second crash box end and defines an expansion hole. An energy absorption structure is housed within the crash box cavity and increases in cross-sectional profile from a second absorption end nested within the expansion hole to a first absorption end secured to the outer bumper surface for being pushed through and radially deforming the expansion hole during an impact to absorb additional energy.

## Description

### CROSS REFERENCE TO RELATED APPLICATIONS

This U.S. Non-Provisional Patent Application claims the benefit of and priority to U.S. Provisional Patent Application Serial No. 63/698,584 filed September 25, 2024, the contents of which are incorporated herein by reference in its entirety.

### TECHNICAL FIELD

This subject invention is related to a vehicle structure/body-in-white-component, such as a vehicle bumper assembly or a vehicle side structure. More specifically, the subject invention is related to an energy absorption structure for use in a vehicle structure.

### BACKGROUND OF THE INVENTION

Vehicle structures are known for providing energy absorbing characteristics. For example, a vehicle bumper assembly is a component of the vehicle frame and comprises a bumper beam and a pair of crash boxes. The crash boxes are positioned on the end of a crossmember of a vehicle body structure and are also secured to the bumper beam so as to absorb impact loads of certain predetermined values during a front or rear impact, thereby reducing or eliminating deformation of the vehicle body structure.

Vehicle side structures, such as a rocker panel, are also part of the vehicle body-in-white, extend across the side of the vehicle, and are designed to absorb energy during a side impact.

However, present vehicle structures and their related components often are not capable of fulfilling the increasing targets in energy absorption and efficiency, which are driven by the ever increasing vehicle weights and crash requirements. Thus, there remains a significant and continuing need for the design of vehicle body-in-white which incorporate energy absorption structures capable of meeting these improved energy absorption characteristics.

### SUMMARY OF THE INVENTION

A vehicle bumper assembly in accordance with the subject disclosure includes a bumper beam extending from a first beam end to a second beam end to present an outer and inner bumper surface disposed in opposing and generally spaced relationship to one another. At least one crash box is disposed adjacent one of the first or second beam ends and extends from a first crash box end secured to the inner bumper surface to a second crash box end to define a crash box cavity. A flange plate is secured to the second crash box end and defines an expansion hole. An energy absorption structure is housed within the crash box cavity and increases in cross-sectional profile from a second absorption end nested within the expansion hole to a first absorption end secured to the outer bumper surface for being pushed through and radially deforming the expansion hole to absorb additional energy during a frontal or rear impact.

A vehicle side structure in accordance with the subject disclosure includes an outer side surface and an inner side surface disposed in spaced relationship with one another to define a side structure cavity. The inner side surface defines at least one expansion hole, and at least one energy absorption structure is housed within the side structure cavity. The at least one energy absorption structure increases in cross-sectional profile from a second absorption end nested within the expansion hole to a first absorption end secured to the outer side surface for being pushed through and radially deforming the expansion hole to absorb additional energy during a side impact.

These and other features and advantages of this invention will become more apparent to those skilled in the art from the detailed description of a preferred embodiment. The drawings that accompany the detailed description are described below.

### BRIEF DESCRIPTION OF THE DRAWINGS

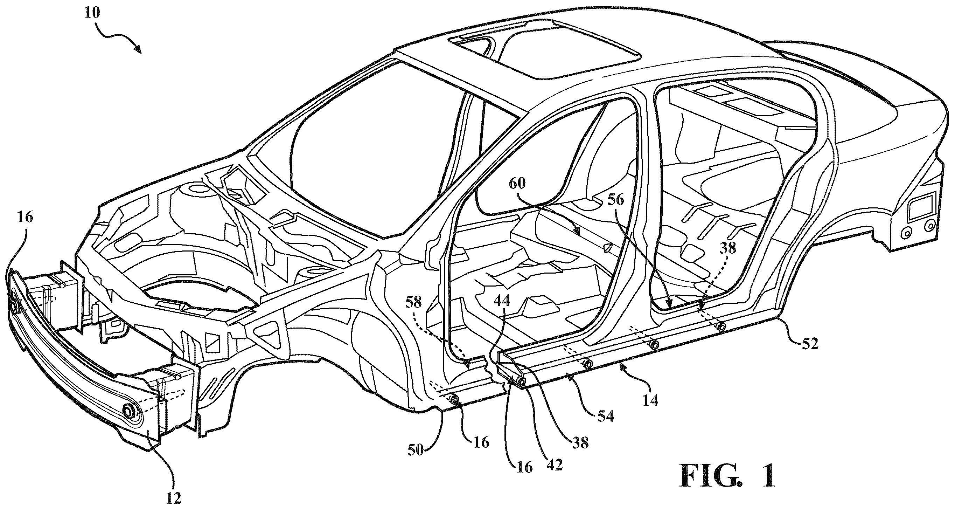

Figure 1 is a perspective view of a vehicle structure including a bumper beam assembly and a vehicle side structure each housing a plurality of energy absorption structures in accordance with an aspect of the disclosure, and with each energy absorption structure increasing in cross-sectional profile from a second absorption end nested or pressed within an expansion hole defined by an inner side surface to a first absorption end secured to an outer side surface.

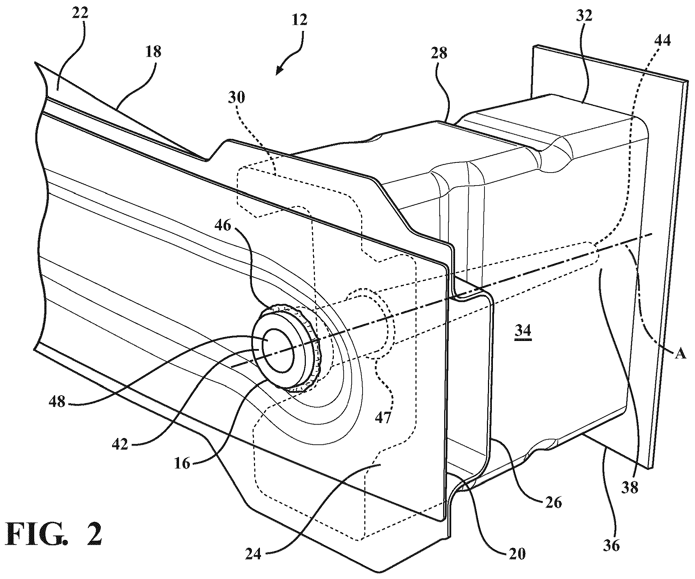

Figure 2 is a perspective front view of the bumper beam assembly illustrating the energy absorption structure housed within a crash box and increasing in cross-sectional profile from a second absorption end nested or pressed within an expansion hole defined by a flange plate to a first absorption end secured to an outer bumper surface of a bumper beam;

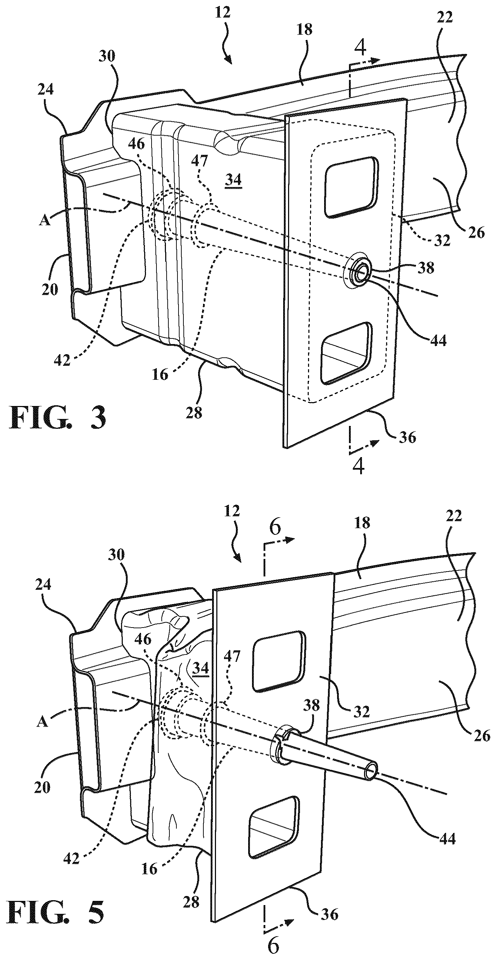

Figure 3 is a perspective rear view of the bumper beam assembly in an un-deformed condition;

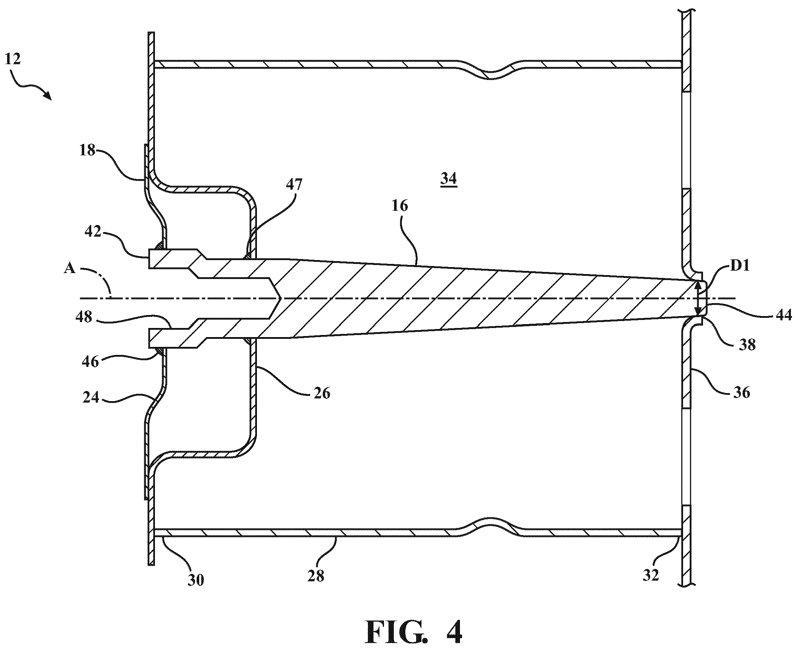

Figure 4 is a side cross-sectional view of the bumper assembly in the un-deformed condition and illustrating a first weld seam securing the first absorption end to the outer bumper surface and an optional second weld seam securing the energy absorption structure to an inner bumper surface of the bumper beam;
Figure 5 is a perspective rear view of the bumper beam assembly in an deformed condition; and

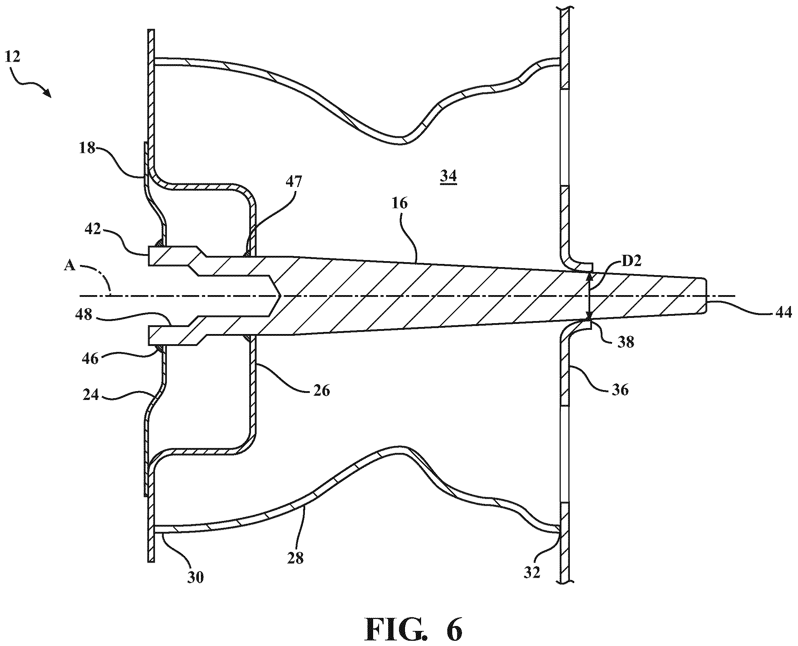

Figure 6 is a side cross-sectional view of the bumper assembly in the deformed condition to illustrate the increasing cross-sectional profile of the energy absorption structure being pushed through and radially deforming the expansion hole to absorb additional energy during a frontal or rear impact.

### DETAILED DESCRIPTION OF THE PREFERRED EMBODIMENTS

Referring to the Figures, wherein like numerals indicate corresponding parts throughout the several views, Figure 1 is a perspective view of a vehicle structure **10** including a bumper assembly **12** extending across the front (or rear) of the vehicle structure **10** and a vehicle side structure **14** (e.g., rocker panel) extending across the side of the vehicle **10.** The vehicle structure **10** is known for providing energy absorbing characteristics, and thus as further illustrated in Figure 1, in accordance with the subject disclosure at least one of the bumper assembly **12** or the vehicle side structure **14** (and preferably both) include at least one energy absorption structure **16** for absorbing additional energy during axial and non-axial loads on the bumper assembly **12** or the vehicle side structure **14** during a respective front, rear or side impact.

As best illustrated in Figures 2-3, the bumper assembly **12** includes a bumper beam **18** extending laterally across a front (or rear) of the vehicle structure **10** from a first beam end **20 to** a second beam end **22** to present an outer bumper surface **24** and an inner bumper surface **26** disposed in opposing and spaced relationship to one another to define a bumper cavity therebetween. A pair of crash boxes **28** are disposed adjacent a respective one of the first or second beam ends **20, 22** and each extend from a first crash box end **30** secured to the inner bumper surface **26** to a second crash box end **32** to define a crash box cavity **34.** As best illustrated in Figures 2-3, the crash boxes **28** can have a generally rectangular cross-sectional profile, such as defined relative to an axis **A** extending between the first and second crash box ends **30, 32.** However, the crash boxes **28** can have other cross-sectional profiles, without departing from the scope of the subject disclosure.

The bumper assembly **12** also includes a pair of flange plates **36** each secured to the second crash box end **32** of a respective one of the crash boxes **28** for use in connecting the bumper assembly **12** to the vehicle structure **10,** and in particular the body in white. The pair of flange plates **36** each define an expansion hole **38,** which can be disposed in aligned relationship with the axis **A** extending through the crash box cavity **34.** However, arrangement of the expansion hole **38** can occur anywhere along the flange plate **36,** particularly if the crash boxes **28** do not extend along an axis **A.**

The bumper assembly **12** includes at least one energy absorption structure **16,** and preferably a pair of the energy absorption structures **16** each housed within a respective one of the crash boxes **28** and extending within the crash box cavity **34** from a first absorption end **42** secured to the outer bumper surface **26** of the bumper beam **18** to a second absorption end **44** nested or pressed within the expansion hole **38** of the flange plate **36.** If the crash boxes **28** extend along an axis A, the energy absorption structures **16** can also extend along this axis **A.** However, the energy absorption structures **16** can be housed within any location of the crash boxes **28** without departing from the scope of the subject disclosure. As best illustrated in Figure 4, the first absorption end **42** can be secured to the outer bumper surface **24** via a first weld seam **46.** As further shown in Figure 4, the energy absorption structure **16** also extends through the bumper beam 18 and can be secured to the inner bumper surface **26** via a second weld seam **47,** either placed on an outer or inner side of the inner bumper surface **26.**

As illustrated in Figures 2-6, a cross-sectional profile of the energy absorption structure **16** increases in size as the energy absorption structure **16** extends from the second absorption end **44** (nested within the expansion hole **38**) to the first absorption end **42** (secured to the outer bumper surface **24**). For example, the energy absorption structure **16** can be conical and taper radially outwardly as the energy absorption structure extends from the second absorption end **44** to the second absorption end **42.** However, as will be appreciated in view of the following disclosure, the energy absorption structure **16** can have other increasing, cross-sectional profiles (e.g., a stepped drill shape), without departing from the scope of the subject disclosure and the related function of the energy absorption structure **16.**

More specifically, with reference to Figures 5-6, during a frontal or rear crash event, the pair of crash boxes **28** start to buckle and to absorb crash loads/energy. At the same time, the energy absorption structures **16** are pushed through and radially deform (i.e., expand) their respective expansion holes **38** in the flange plate **36** as a result of the increasing cross-sectional profile of the energy absorption structure **16** being pushed and passed through the expansion hole **38** by the force of the frontal or rear impact (*See* Figure 6). Put another way, as the increasing cross-sectional profile of the energy absorption structure 16 passes through the expansion hole **38,** this increase in size establishes and imposes a radial force that expands the expansion hole **38**. For example, if the energy absorption structure **16** has a conical cross-sectional shape, the expansion hole **38** initially has an original (un-deformed) diameter **D1** (*See* Figure 4) which is deformed to a larger, radially expanded diameter **D2** (*See* Figure 6) as the energy absorption structure **16** is pushed through the expansion hole **38.** This radial expansion and deformation of the expansion hole **38** by the energy absorption structures **16** advantageously provides the absorption of additional energy over that absorbed by the buckling crash boxes **28** themselves, and provides for increased overall crash efficiency that leads to reduced barrier intrusion and a reduced crash structure size for the bumper assembly **12**.

For example, the increased crash box efficiency, as a result of the inclusion of the energy absorption structure **16,** provides the ability to stop the barrier earlier during the crash event (less intrusion of the crash barrier into the vehicle). This then leads to the ability to reduce a length of the crash boxes **28,** while still ensuring that the components in the "safety zone" - like the cooler module, headlights, etc. - are secured in a low-speed crash event. And by reducing the length of the crash boxes **28,** the bumper beam **18** can be shifted backwards as well, so the vehicle overhang (distance from front wheels to front vehicle fascia) can be reduced, leading to material, weight and cost savings.

Advantageously, a force/displacement curve representing an impact of the energy absorption device **16** on the expansion hole **38** can be easily adjusted by modifying the geometry (i.e., cross-sectional profile) of the energy absorption device 16. Put another way, the geometry of the energy absorption device **16** can be tailored to meet the desired crash performance for the crash boxes **28,** and the related bumper assembly **12.**

The housing of the energy absorption structure **16** within the crash box **28** also allows the energy absorption structure **16** to provide an additional guiding effect for the crash box **28** as it is collapsed or buckled during axial or non-axial loads. Put another way, the energy absorption structure **16** advantageously guides a collapse of the crash box **28** during the frontal or rear impact, providing an improved and more predictable folding behavior for the crash box **28,** even under non-axial crash loads.

As best illustrated in Figures 2 and 4, the first end **42** of the energy absorption structure **16,** when implemented in the bumper assembly **12,** can also define an inner thread **48** for receiving the mounting of a towing hook.

As illustrated in Figure 1, the energy absorption structure **16** can also be implemented in a vehicle side structure **14** for the vehicle structure **10** to provide improved crash efficiency and lead to increased battery and passenger safety during a side impact, in accordance with the aforementioned principles. More specifically, as best illustrated in Figure 1, the vehicle side structure **14** (e.g., a rocker panel) extends from a front end **50** (to be disposed adjacent the front wheels) to a rear end **52** (to be disposed adjacent the rear wheels) to present an outer side surface **54** and an inner side surface **56** disposed in spaced relationship with one another and collectively defining a side structure cavity **58.**

The inner side surface **56** defines at least one expansion hole **38,** and at least one energy absorption structure **16** is disposed within the side structure cavity **58** and extends from a first absorption end **42** secured to the outer side surface **54** to a second absorption end **44** nested or pressed within the at least one expansion hole **38.** Similar to the embodiment described above in relation to the bumper assembly **12,** the cross-sectional profile of the energy absorption structure **16** increases in size as the energy absorption structure **16** extends from the second absorption end **44** (nested within the expansion hole **38**) to the first absorption end **42** (secured to the outer side surface **54**).

During a side crash event, the vehicle side structure **14** starts to collapse and to absorb crash loads/energy. At the same time, the energy absorption structure **16** gets pushed through the expansion hole **38,** and due to friction and expansion of the expansion hole **38,** additional energy will be absorbed. Put another way, the increasing cross-sectional profile of the energy absorption structure **16** being passed through the expansion hole **38** imposes a radial force that expands the expansion hole **38.** This expansion and deformation of the expansion hole **38** by the energy absorption structure **16** advantageously provides the absorption of additional energy over that absorbed by the vehicle side structure **14** itself, and provides for increased overall crash efficiency. As can be seen by Figure 1, the energy absorption structure **16** will then intrude into the underbody (body in white) or battery structure **60.**

As best illustrated in Figures 1 and 6, the vehicle side structure **14** preferably includes a plurality of energy absorption structures **16** disposed within the side structure cavity **58** in spaced relationship with one another between the front and rear ends **50, 52.** In this arrangement, the inner side surface **56** would define a plurality of expansion holes **38** each for receiving a second absorption end **44** of a respective one of the energy absorption structures **16.** During the side impact, the energy absorption structures **16** located closest and adjacent to the area of impact would be pushed through their respective expansion holes **38** to absorb additional energy for the vehicle side structure **14.**

While preferred embodiments of the present invention are shown and described, it is envisioned that those skilled in the art may devise various modifications of the present invention without departing from the spirit and scope of the invention. In other words, the subject disclosure it is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of disclosure.

## Claims

1. A vehicle bumper assembly comprising:
a bumper beam extending from a first beam end to a second beam end to present an outer bumper surface and an inner bumper surface disposed in opposing and generally spaced relationship to one another;
at least one crash box disposed adjacent one of said first or second beam ends and extending from a first crash box end secured to said inner bumper surface to a second crash box end to define a crash box cavity;
a flange plate secured to said second crash box end and defining an expansion hole; and
an energy absorption structure housed within said crash box cavity and increasing in cross-sectional profile from a second absorption end nested within said expansion hole to a first absorption end secured to said outer bumper surface for being pushed through and radially deforming said expansion hole during a frontal or rear impact to absorb additional energy.

2. The vehicle bumper assembly as set forth in Claim 1, wherein said energy absorption structure is conical shaped and tapers radially outwardly from said second absorption end to said first absorption end.

3. The vehicle bumper assembly as set forth in Claim 2, wherein said expansion hole having an original un-deformed diameter being deformed to a radially expanded diameter being larger than the original un-deformed diameter as said energy absorption structure is pushed through said expansion hole.

4. The vehicle bumper assembly as set forth in Claim 1, wherein said first absorption end of said energy absorption structure is secured to said outer bumper surface via a first weld seam.

5. The vehicle bumper assembly as set forth in Claim 4, wherein said energy absorption structure is secured to said inner bumper surface via a second weld seam.

6. The vehicle bumper assembly as set forth in Claim 1, wherein said crash box extends along an axis between said first and second crash box ends, and said energy absorption structure and said expansion hole are aligned on the axis.

7. The vehicle bumper assembly as set forth in Claim 1, wherein said at least one crash box includes a pair of crash boxes each disposed adjacent a respective one of said first and second beam ends and each housing a respective energy absorption structure.

8. A vehicle side structure comprising:
an outer side surface and an inner side surface disposed in spaced relationship with one another to define a side structure cavity;
said inner side surface defining at least one expansion hole; and
at least one energy absorption structure housed within said side structure cavity and increasing in cross-sectional profile from a second absorption end nested within said expansion hole to a first absorption end secured to said outer side surface for being pushed through and radially deforming said expansion hole during a side impact to absorb additional energy.

9. The vehicle side structure as set forth in Claim 8, wherein said inner side surface defines a plurality of expansion holes, and said energy absorption structure includes a plurality of energy absorption structures housed within said side structure cavity and each extending from first absorption ends secured to said outer side surface to second absorption ends nested within a respective one of said plurality of expansion holes.

10. The vehicle side structure as set forth in Claim 9, wherein each of said plurality of energy absorption structures are conical shaped and taper radially outwardly from said second absorption end to said first absorption end.

11. The vehicle side structure as set forth in Claim 8, wherein the vehicle side structure is a rocker panel.

12. A vehicle structure comprising:
an outer surface and an inner surface disposed in spaced relationship with one another to define a structure cavity;
said inner surface defining at least one expansion hole; and
an energy absorption structure housed within said structure cavity and increasing in cross-sectional profile from a second absorption end nested within said expansion hole to a first absorption end secured to said outer surface for being pushed through and radially deforming said expansion hole during an impact to absorb additional energy.

13. The vehicle structure as set forth in Claim 11, wherein said energy absorption structure is conical shaped and tapers radially outwardly from said second absorption end to said first absorption end.

14. The vehicle structure as set forth in Claim 12, said first absorption end of said energy absorption structure is secured to said outer surface via a weld seam.

15. The vehicle structure as set forth in Claim 12, wherein said expansion hole having an original un-deformed diameter being deformed to a radially expanded diameter being larger than the original un-deformed diameter as said energy absorption structure is pushed through said expansion hole.
